# EUROPEAN PATENT APPLICATION

(11) **EP 2 395 416 A1**
(43) Date of publication of application: **14.12.2011**
(21) Application number: 10738441.4
(22) Date of filing: 27.01.2010
(51) Int. Cl.: G06F 3/041, G06F 3/048

(54) **INFORMATION PROCESSING DEVICE, INFORMATION PROCESSING METHOD, AND PROGRAM**

(30) Priority: 04.02.2009 JP 2009024237
(71) Applicant: Sony Corporation, Tokyo 108-0075 (JP)
(72) Inventor: HOMMA, Fuminori, Tokyo 108-0075 (JP); NASHIDA, Tatsushi, Tokyo 108-0075 (JP)
(74) Representative: Jackson, Jonathan Andrew
(86) International application number: PCT/JP2010/051020
(87) International publication number: WO 2010/090106

(57) **Abstract**

Provided are a portable information processing device having a touch pa nel, and an information processing method and a program in the information processing device for enabling a user manipulation to be simpler and more intuitive than in a related art and large screen displayed content to be directly manipulated by the portable information processing device.

The portable information processing device includes an input position detection unit provided at a display screen side of the display device, for detecting a position of an input by a manipulation body on the display screen, a gesture detection unit provided at a back side of the display screen of the display device, for detecting a predetermined gesture, an output device selection unit for selecting an output device for outputting content data corresponding to the selected object based on first gesture information that indicates gesture detected by the gesture detection unit, and a signal generation unit for generating a control signal for causing the selected output device to execute a predetermined process based on second gesture information that indicates gesture detected by the gesture detection unit.

## Description

### Technical Field

The present invention relates to an information processing device, an information processing method, and a program.

### Background Art

In recent years, portable information processing devices having a touch panel or a touch pad (hereinafter, a touch panel) mounted thereon have been widely used. Such portable information processing devices include, for example, a portable telephone, a personal handy-phone system (PHS), a portable video player, a portable music player, a personal digital assistant (PDA), or the like. Further, touch panels have recently been mounted on television receivers, portable game machines, remote controller (hereinafter, remocon) or the like.

Recently, since an area of a display screen in a portable information processing device is limited, an interaction in which displayed content in the screen of the portable information processing device having the limited screen area is intuitively output to a large screen has been focused on. For example, in Patent Literature 1, a technique for swapping a display screen of a portable information processing device for a display device having a large screen through an intuitive gesture input to a touch panel of the portable information processing device has been proposed as such an interaction.

### Citation List

### Patent Literature

Patent Literature 1: Japanese Patent Application Laid-Open Publication No. 2004-336597

### Summary of Invention

### Technical Problem

However, with a scheme of assigning a gesture for swapping for a large screen to a display screen of a portable information processing device as in the technique disclosed in Patent Literature 1, it is difficult to identify gestures other than the assigned gesture. Further, in the technique of Patent Literature 1, the number of gestures increases by gestures for swapping, which increases manipulations to be remembered by a user. Thus, in the technique disclosed in Patent Literature 1, there is a problem in that a user manipulation is complicated.

Further, in the technique of Patent Literature 1, as a manipulation method for viewing of content that has been outputs to a display device having a large screen, there is no means (direct manipulation means) for direct manipulation using the portable information processing device. There is a need for such a direct manipulation means. In particular, even in the case of viewing web content, for example, including video and music contents requiring a fast forward or rewind manipulation or new article and map contents requiring a manipulation such as scroll or zoom, there is a high need for the direct manipulation means.

The present invention is made in view of the above-mentioned problems, and aims to enable, in a portable information processing device having a touch panel mounted thereon, an information processing method in the information processing device, and a program, a user manipulation to be simpler and more intuitive than in a related art, and large screen displayed content to be directly manipulated by the portable information processing device.

### Solution to Problem

According to one aspect of the present invention in order to achieve the above-mentioned object, there is provided an information processing device including: a display device on which a predetermined object is displayed; an input position detection unit provided at a display screen side of the display device, for detecting a position of an input by a first manipulation body on the display screen; an object specifying unit for specifying a selected object that is the object selected by the first manipulation body based on input position information indicating the input position and display position information indicating a display position of the object; a gesture detection unit provided at a back side of the display screen of the display device, for detecting a predetermined gesture when the predetermined gesture is input by a second manipulation body; an output device selection unit for selecting an output device that is an external device for outputting content data corresponding to the selected object based on first gesture information indicating the gesture detected by the gesture detection unit; and a signal generation unit for generating a control signal for causing the selected output device to execute a predetermined process based on second gesture information indicating a gesture detected after position information of the content data is transmitted to the output device.

The information processing device may further include a position information transfer unit for transferring the position information of the content data corresponding to the selected object to the output device selected by the output device selection unit.

In the information processing device, the gesture detection unit may be capable of detecting a position of an input by the second manipulation body on the back surface of the display screen, the information processing device may further include an input area detection unit for dividing an area of the display screen and an area on the back surface of the display screen into a plurality of divided areas, respectively, and detecting the divided area on the display screen where the first manipulation body is located and the divided area on the back surface of the display screen where the second manipulation body is located based on first input position information indicating the input position of the first manipulation body input from the input position detection unit and second input position information indicating the input position of the second manipulation body input from the gesture detection unit; and a judgment unit for judging whether the divided area where the first manipulation body is located and the divided area where the second manipulation body is located have a corresponding positional relationship based on first divided area information indicating the divided area where the first manipulation body is located and second divided area information indicating the divided area where the second manipulation body is located, and the position information transfer unit may transfer the position information only when it is determined by the judgment unit that the divided area where the first manipulation body is located and the divided area where the second manipulation body is located have a corresponding positional relationship.

The information processing device may further include a layout adjustment unit for acquiring display control information from the output device, the display control information being information for controlling display of content data corresponding to the selected object on the output device, and generating an instruction signal for adjusting a layout of the content data in the display screen of the output device based on the acquired display control information and third gesture information indicating the gesture detected by the gesture detection unit after the content data is displayed on the output device.

When layout adjustment is performed in displaying one content data, the output device may store layout information about the layout of the content data after the layout adjustment, to be associated with the position information of the content data, and the layout adjustment unit may transmit, to the output device, application condition information indicating an application condition for the layout information associated with the position information of the content data stored in the output device, when the output device displays another content data, according to gesture information input from the gesture detection unit.

The information processing device may further include a device registration unit for performing, on an external device, a device registration process in which the external device and the information processing device are allowed to access each other through a protocol common to the external device and the information processing device via a network, and the output device selection unit may select the output device from among the external devices subjected to the device registration process.

According to another aspect of the present invention in order to achieve the above-mentioned object, there is provided an information processing method including: an input position detection step of detecting a position of an input by a first manipulation body on a display screen of a display device on which a predetermined object is displayed; an object specifying step of specifying a selected object that is the object selected by the first manipulation body based on input position information indicating the input position and display position information indicating a display position of the object; a gesture detection step of detecting a predetermined gesture input by a second manipulation body in a state in which the selected object is selected by the first manipulation body; an output device selection step of selecting an output device that is an external device for outputting content data corresponding to the selected object based on first gesture information indicating the gesture detected in the gesture detection step; a position information transmission step of transmitting position information of the content data to the output device; and a signal generation step of generating a control signal for causing the selected output device to execute a predetermined process based on second gesture information indicating a gesture detected after the position information of the content data is transmitted to the output device.

According to yet another aspect of the present invention in order to achieve the above-mentioned object, there is provided a program for causing a computer to function as an information processing device, the information processing device including: an input position detection unit provided at a display screen side of a display device on which a predetermined object is displayed, for detecting a position of an input by a first manipulation body on the display screen; an object specifying unit for specifying a selected object that is the object selected by the first manipulation body based on input position information indicating the input position and display position information indicating a display position of the object; a gesture detection unit provided at a back side of the display screen of the display device, for detecting a predetermined gesture when the predetermined gesture is input by a second manipulation body; an output device selection unit for selecting an output device that is an external device for outputting content data corresponding to the selected object based on first gesture information indicating the gesture detected by the gesture detection unit; and a signal generation unit for generating a control signal for causing the selected output device to execute a predetermined process based on second gesture information indicating a gesture detected after position information of the content data is transmitted to the output device.

According to such a configuration, the computer program is stored in a storage unit included in a computer, and read to and executed by a CPU included in the computer, such that the computer can function as the information processing device. Further, a computer-readable recording medium having a computer program recorded therein can be provided. The recording medium is, for example, a magnetic disk, an optical disc, a magneto-optical disc, a flash memory, or the like. Further, the computer program may be distributed, for example, via a network instead of using the recording medium.

### Advantageous Effects of Invention

According to the present invention, in the portable information processing device having the touch panel mounted thereon, the information processing method in the information processing device, and the program, a user manipulation is simpler and more intuitive than in a related art, and large screen displayed content can be directly manipulated by the portable information processing device.

### Brief Description of Drawings

[Fig. 1] Fig. 1 is an illustrative diagram showing a configuration of an information processing system including a portable information processing device in a related art.
[Fig. 2] Fig. 2 is an illustrative diagram showing an overall configuration of an information processing system according to a first embodiment of the present invention.
[Fig. 3] Fig. 3 is an illustrative diagram showing an appearance configuration (display screen side) and a use example of the information processing device according to the first embodiment.
[Fig. 4] Fig. 4 is an illustrative diagram showing an appearance configuration (back side) and a use example of the information processing device according to the first embodiment.
[Fig. 5] Fig. 5 is an illustrative diagram showing an overview of an information processing method according to the first embodiment.
[Fig. 6] Fig. 6 is an exploded perspective view showing a hardware configuration of the information processing device according to the first embodiment.
[Fig. 7] Fig. 7 is a block diagram showing the hardware configuration of the information processing device according to the first embodiment.
[Fig. 8] Fig. 8 is a block diagram showing a functional configuration of the information processing device according to the first embodiment.
[Fig. 9] Fig. 9 is a block diagram showing a configuration of a content data management unit according to the first embodiment.
[Fig. 10] Fig. 10 is a flowchart showing a flow of a process of the information processing method according to the first embodiment.
[Fig. 11] Fig. 11 is a flowchart showing a flow of a process of the information processing method according to the first embodiment.
[Fig. 12] Fig. 12 is an illustrative diagram showing a third example in which the information processing method according to the first embodiment is applied.
[Fig. 13] Fig. 13 is an illustrative diagram showing a second example in which the information processing method according to the first embodiment is applied.
[Fig. 14] Fig. 14 is an illustrative diagram showing a third example in which the information processing method according to the first embodiment is applied.
[Fig. 15] Fig. 15 is an illustrative diagram showing a modified example of the information processing method according to the first embodiment.
[Fig. 16] Fig, 16 is an illustrative diagram showing a modified example of the information processing method according to the first embodiment.

### Description of Embodiments

Hereinafter, preferred embodiments of the present invention will be described in detail with reference to the appended drawings. Note that, in this specification and the drawings, elements that have substantially the same function and structure are denoted with the same reference signs, and repeated explanation is omitted.

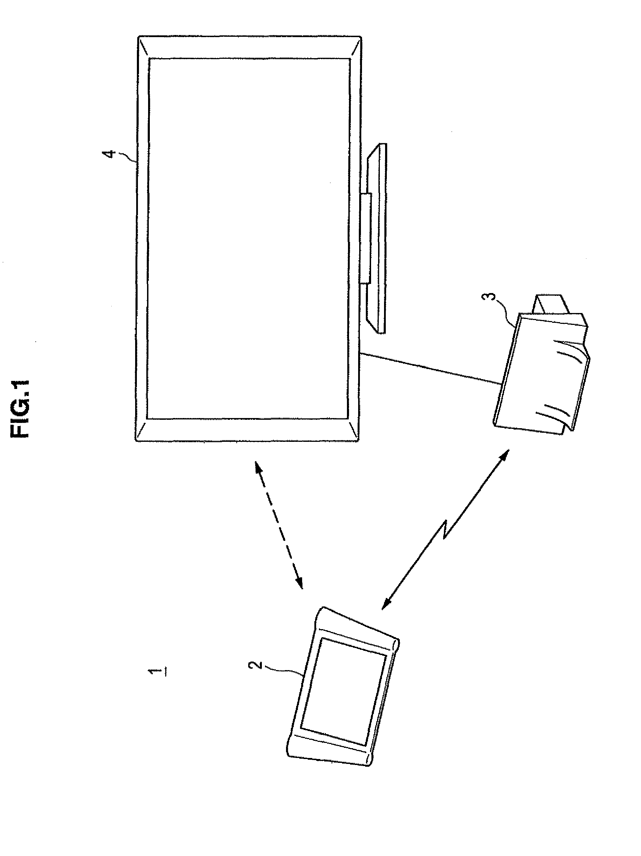

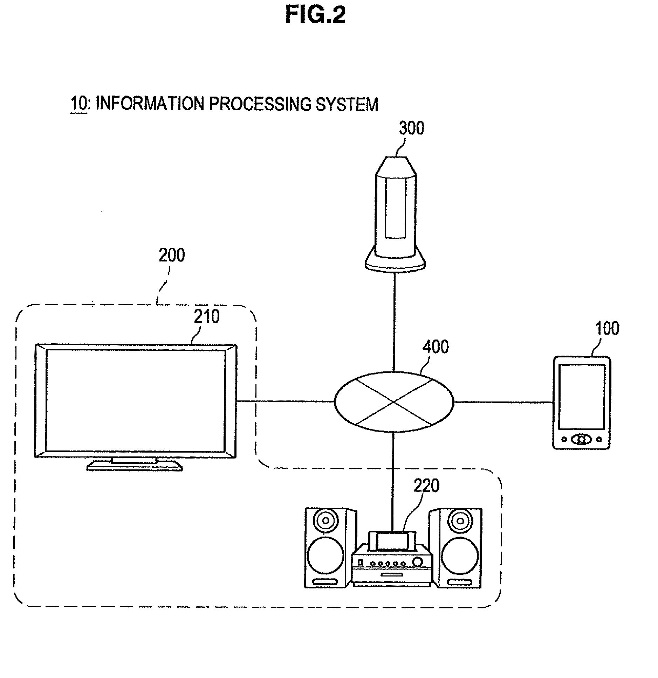

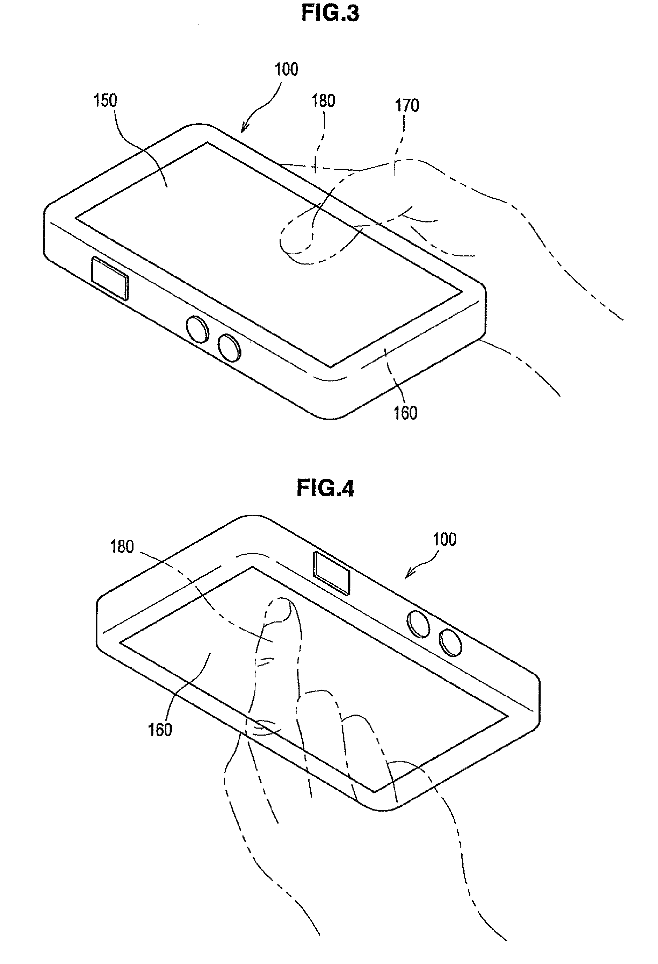

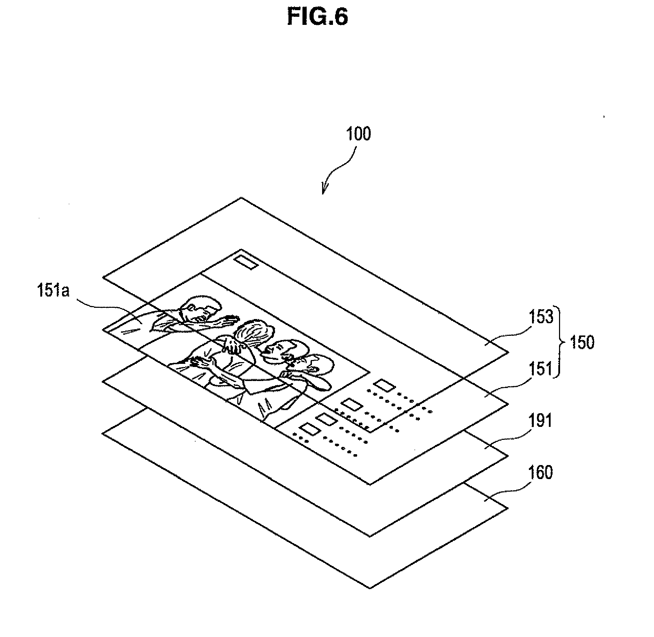

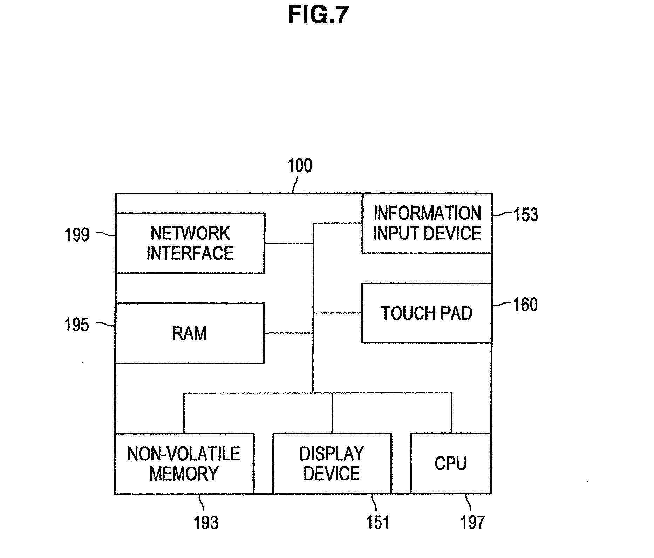

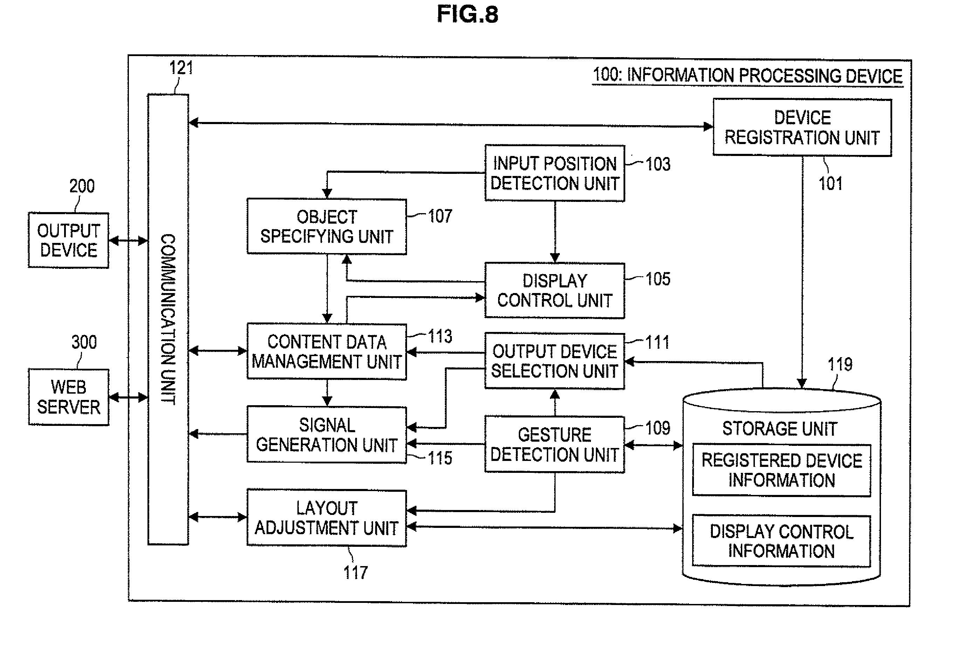

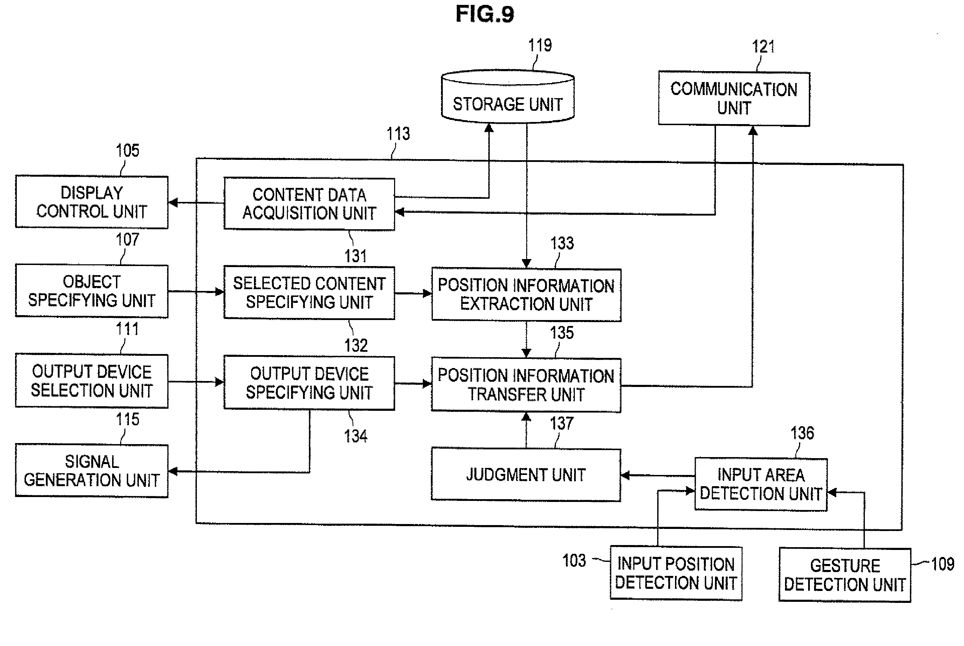

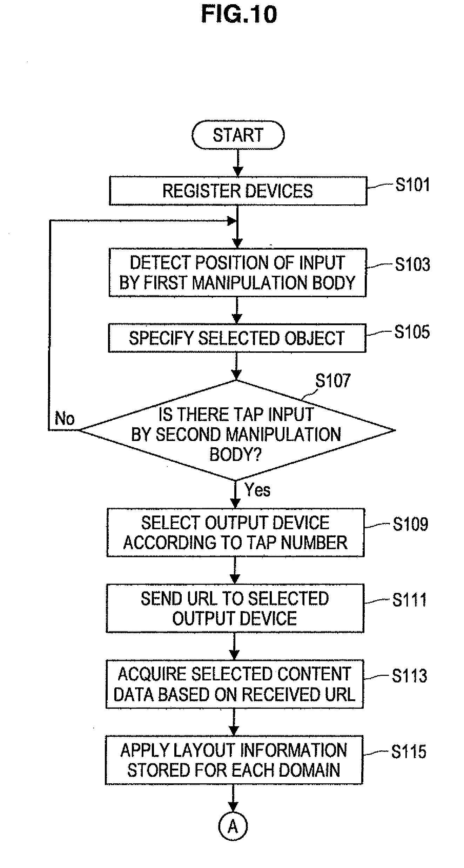

Also, a description will be given in the following order.
1. Example of Related Art (Fig. 1)
2. Solution to Problem in Example of Related Art
3. First Embodiment
3-1. Configuration of Information Processing System (Fig. 2)
3-2. Overview of Information Processing Device and Information Processing Method (Figs. 3 to 5)
3-3. Hardware Configuration of Information Processing Device (Figs. 6 and 7)
3-4. Functional Configuration of Information Processing Device (Figs. 8 and 9)
3-5. Information Processing Method (Figs. 10 to 16)
4. Conclusion

### <1. Example of Related Art>

First, an example of a technique of swapping a display screen of a portable information processing device for a display device having a large screen in an art related to the present invention will be described with reference to Fig. 1 prior to explanation of an information processing device according to a first embodiment of the present invention. Fig. 1 is an illustrative diagram showing a configuration of a video display system 1 (e.g., see Patent Literature 1) as an example of an information processing system including the portable information processing device in the related art.

As shown in Fig. 1, the video display system 1 includes a flexible display device 2 as an example of an information processing device in a related art, a base device (base station) 3, and a large screen display device 4. In this video display system 1, a video signal supplied from the base device 3 is displayed by the flexible display device 2 and the large screen display device 4.

Further, in the video display system 1, indication content from a user is assigned to a coordinate change of an indication position in a touch panel on an LCD as a display clement of the flexible display device 2 in advance. The flexible display device 2 detects the coordinate change of an indication position on the display screen, identifies the indication content assigned to the detected coordinate change, and forms a control signal based on the identified indication content.

Here, for example, it is assumed that indication content for swapping displayed content of the flexible display device 2 for the display screen of the large screen display device 4 is assigned to a coordinate change of an indication position (e.g., a drag manipulation from a user's hand source to a hand destination) on the display screen of the flexible display device 2. In this case, when the user performs a drag manipulation, the displayed content of the flexible display device 2 may be swapped for the display screen of the large screen display device 4.

### <2. Solution to Problem in Example of Related Art>

However, in such a technique, a user manipulation is complicated, and the flexible display device 2 does not have a means for directly manipulating content that is output to the large screen display device 4, as described above.

To resolve this problem, in an information processing device and an information processing method according to a first embodiment of the present invention, which will be described below, touch panels are provided on both surfaces of a display panel of a portable information processing device. Here, in one touch panel (e.g., the touch panel at a surface of the display panel), a manipulation for the portable information processing device is performed. Further, in the other touch panel (the touch pad at a back side of the display panel), a direct manipulation for an external device (e.g., a device for playing back content corresponding to a swapped object) is performed. Further, an interworking manipulation of the one touch panel and the other touch panel enables a process such as transfer of content to the external device to be performed seamlessly. Hereinafter, the information processing device and the information processing method according to the first embodiment of the present invention will be described in detail.

### <3. First Embodiment

### [3-1. Configuration of Information Processing System]

Initially, an overall configuration of an information processing system including the information processing device according to the first embodiment of the present invention will be described with reference to Fig. 2. Fig. 2 is an illustrative diagram showing the overall configuration of the information processing system according to the present embodiment.

As shown in Fig. 2, an information processing system 10 according to the present embodiment includes a portable information processing device 100, an output device 200, and a web server 300. In this information processing system 100, the information processing device 100 is capable of communicating with the output device 200 and the web server 300 via a network 400. A type of the network 400 is not particularly limited, but, for example, may be the Internet, a home network using a protocol such as Digital Living Network Alliance (DLNA), or the like.

In the information processing system 10, when a user views a web page in the web server 300, for example, through a browser using the information processing device 100, the user may select specific content and output the content to the output device 200. In this case, when the user manipulates the information processing device 100, the information processing device 100 transmits position information of selected content data (e.g., a URL of a web page of a storage destination of the content data) acquired via the Internet 400 to the output device 200. Further, the output device 200 having acquired the position information of the content data outputs the content data through an application associated with the content data. Further, when the user manipulates the information processing device 100, the information processing device 100 generates a control signal for executing various processes in the output device 200, and transmits the generated control signal to the output device 200. The output device 200 having received the control signal executes a process (e.g., scroll and zoom of an image, and fast forward, rewind and volume change of an image or music) corresponding to the control signal.

Next, a configuration of each device included in the information processing system 10 will be described.

The information processing device 100 is an electronic device that is connected to the network 400 via any means such as fiber to the home (FTTH) or Worldwide Interoperability for Microwave Access (WiMAX), and enables a web page to be viewed through the browser. Such an information processing device 100 may be a notebook-type personal computer (hereinafter, PC), a portable telephone, personal handy-phone system (PHS), a portable video player, a portable music player, a personal digital assistant (PDA), a portable game machine, or the like. Further, the information processing device 100 may be a remote controller (hereinafter, remocon) as long as the remocon has a display device such as an LCD.

A detailed configuration of the information processing device 100 will be described below, but the information processing device 100 includes a display device, in which a touch panel or a touch pad is mounted on both surfaces of a display screen of the display device. When the user manipulates the information processing device 100, the user usually moves a finger or a stylus (hereinafter referred to as "manipulation body") while pressing the surface of the touch panel or the touch pad using the manipulation body to perform a predetermined manipulation (gesture manipulation). When such a manipulation is performed, the touch panel reads a point at which the manipulation body contacts the touch panel surface, as a coordinate. In this case, a manner in which the touch panel reads a position of the contact between the manipulation body and the touch panel surface is not particularly limited, but any manner such as an electrostatic manner, a pressing manner, or an optical manner may be used. The coordinate read by the touch panel is sent to an arithmetic process means and a predetermined process is executed. Further, while an example in which only one information processing device 100 is connected to the network 400 is shown in Fig. 1, the information processing device 100 is not particularly limited in number.

The output device 200 is a device that outputs content data corresponding to an object selected by the manipulation body from among objects displayed on the display screen of the display device of the information processing device 100. Such an output device 200 is not particularly limited as long as it is a device capable of outputting content data that is on the information processing device 100. Concrete examples of the output device 200 include a television receiver having a large screen display, a stationary audio device, and the like. Further, the output device 200 is also connected to the network 400 via any means such as FTTH or WiMAX, similar to the information processing device 100. In Fig. 1, an example in which a television receiver 210 having a large screen display, and a stationary audio device 220 are connected as the output device 200 to the network 400 is shown. Here, the output device 200 is not particularly limited in number.

In the present embodiment, when the output device 200 is selected as a device for outputting the content data corresponding to the object selected by the manipulation body (hereinafter, selected content data), the output device 200 acquires position information of the content data from the information processing device 100. The output device 200 acquires content data from the web server 300 based on the acquired position information of the content data (e.g., a URL of a content data storage destination), and executes a predetermined process based on the control signal from the information processing device 100. Such a process includes, for example, focus or zoom when the selected content data is a still image such as a photograph, and playback, pause, fast-forward, rewind, or volume adjustment when the selected content is a moving image or music.

The web server 300 transmits the position information of the content data (e.g., a URL of a web page of the content data storage destination) to the information processing device 100, for example, according to a request from the information processing device 100. Further, the web server 300 distributes the content data corresponding to the position information of the content data in response to a request from the output device 200 having acquired the position information of the content data from the information processing device 100. A type of the content data distributed by the web server 300 is not particularly limited as long as it is data displayed on the display unit. Further, in the present embodiment, the web server 300 is a server that provides web services that may be executed, for example, on a web browser, such as a photo-sharing service, a moving image distribution service, a music distribution service, and the like. The user may view the content distributed from the web server 300 on the information processing device 100 or the output device 200.

The network 400 is a communication line network that connects the information processing device 100, the output device 200, and the content distribution server 400 so that they can perform bidirectional or unidirectional communication. The network 400, for example, includes a public network such as the Internet, a telephone line network, a satellite communication network, or a broadcast communication path, or a virtual private network such as a wide area network (WAN), a local area network (LAN), an internet protocol-virtual private network (IP-VPN), Ethernet (registered trademark) or a wireless LAN. The network 400 may be a wired/wireless network.

Further, as described above, the information processing device 100 and the output device 200 are capable of data communication with each other on a home network through a protocol such as DLNA.

### [3-2. Overview of Information Processing Device and Information Processing Method]

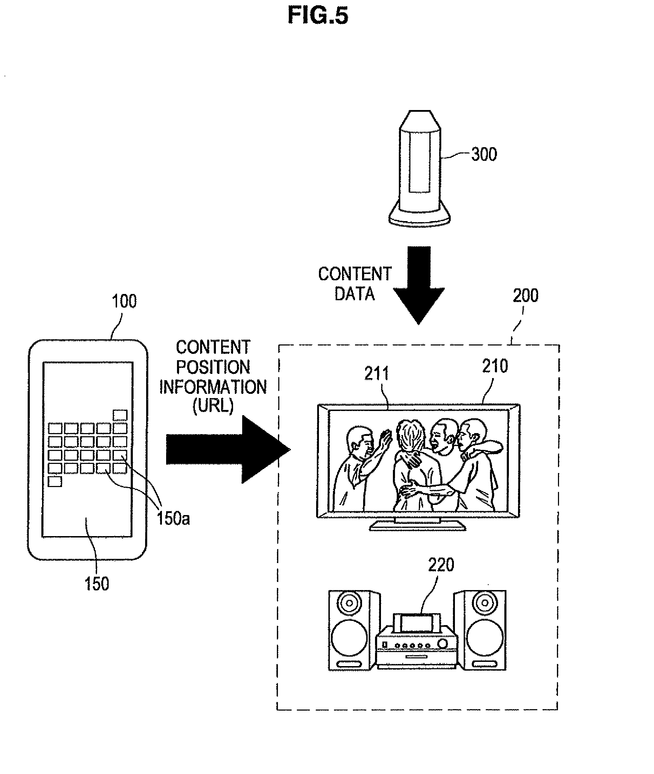

Next, an overview of the information processing device 100 and the information processing method according to the present embodiment will be described with reference to Figs. 3 to 5. Fig. 3 is an illustrative diagram showing an appearance configuration (display screen side) and a use example of the information processing device 100 according to the present embodiment. Fig. 4 is an illustrative diagram showing an appearance configuration (back side) and a use example of the information processing device 100 according to the present embodiment. Fig. 5 is an illustrative diagram showing an information processing method according to the present embodiment.

### (Overview of Information Processing Device)

As shown in Figs. 3 and 4, the information processing device 100 is a portable electronic device having a touch panel 150 provided on a surface (display screen side) and a touch pad 160 provided on a back surface (a back side of the display screen).

As shown in Fig. 3, a user manipulates the information processing device 100 through a gesture manipulation in the touch panel 150 on the surface. Specifically, the user may view content on the web server 300 through the web browser through a tap manipulation or a drag manipulation using the first manipulation body 170 (e.g., user's thumb) in the touch panel 150. Further, the user may select an object corresponding to content data to be output to the output device 200 among objects displayed on the touch panel 150, for example, through a tap manipulation using the first manipulation body 170.

Meanwhile, as shown in Fig. 4, the user may perform selection of the output device 200, swap for the selected output device 200, a direct manipulation of the output device 200, and the like through a gesture manipulation in the touch pad 160 on the back surface. Specifically, the user may select a desired output device 200, for example, through a tap manipulation or a drag manipulation using the second manipulation body 180 (e.g., the user's index finger) in the touch pad 160. The desired output device 200 cited herein is the output device 200 that outputs the content data corresponding to the object selected by the gesture input in the first manipulation body 170 (hereinafter, selected content data). When the output device 200 is selected by the user gesture manipulation, the information processing device 100 acquires the position information of the selected content data from the web server 300 and transmits the acquired position information to the output device 200. Further, the user may directly perform a manipulation for the output device 200 using the information processing device 100 by performing, for example, a tap manipulation or a drag manipulation in the touch pad 160 after the position information of the selected content data is transmitted to the output device 200. The direct manipulation of such an output device 200 includes, for example, focus, zoom or the like when the selected content data is a still image such as a photograph, and playback, pause, fast-forward, rewind, volume adjustment or the like when the selected content is a moving image or music.

Hereinafter, an example in which a user's right thumb is used as one example of the first manipulation body 170 and the user's right index finger (if necessary, including the user's right ring and little fingers) is used as one example of the second manipulation body 180 will be described. However, the present invention is not limited to such fingers. That is, as the first manipulation body 170 and the second manipulation body 180, fingers (e.g., left fingers) that can be easily used by the user may be used or a stylus may be used.

### (Overview of Information Processing Method)

Next, an overview of an information processing method using the above information processing device 100 according to the present embodiment will be described. A screen of an application associated with played content, such as a general web browser, a video player, or a music player, is displayed on the display screen (the touch panel 150) of the information processing device 100. In Fig. 5, an example in which a plurality of thumbnail images are displayed as rectangular objects on the screen of the application displayed on the touch panel 150 of the information processing device 100 is shown. An object 150a from among the plurality of objects displayed on the touch panel 150 is tapped and selected by the first manipulation body 170 (the user's thumb). When a tap manipulation is performed on the touch pad 160 by the second manipulation body 180 (e.g., the user's index finger) in a state in which the object 150a is tapped by the first manipulation body 170, the output device 200 is selected, for example, by a number of taps. In Fig. 5, a case in which a television receiver 210 having a large screen display 211 and an audio device 220 are connected as the output device 200 to a network 400 is illustrated. In this example, for example, when the tap number of the touch pad 160 is 1, the information processing device 100 may select the television receiver 210 as the output device 200. Further, for example, when the tap number of the touch pad 160 is 2, the information processing device 100 may select the audio device 220 as the output device 200. The information processing device 100 transmits position information (e.g., a URL) of the content data corresponding to the object 150a to the selected output device 200.

Thus, a cooperation manipulation of the touch panel 150 on the surface of the information processing device and the touch pad 160 on the back surface enables information such as the position information of the content data corresponding to the object 150a selected by the first manipulation body 170 to be transmitted to the output device 200.

The output device 200 having received the position information of the content data accesses the web server 300 based on the position information of the content data, and acquires the content data corresponding to the object 150a from the web server 300. For example, when the output device 200 selected by the information processing device 100 is the television receiver 210, content corresponding to the object 150a is displayed on the display 211. Thereafter, when a gesture is input to the touch pad 160 by the second manipulation body 180, a process corresponding to the gesture (e.g., zoom of a photo image or playback of a moving image) is executed in the television receiver 210. Further, for example, when the output device 200 selected by the information processing device 100 is the audio device 220, music content data acquired from the web server 300 is stored in the audio device 220. In this case, when the audio device 220 has a display unit, a player screen corresponding to the acquired music content data may be displayed on this display unit. Thereafter, when a gesture is input to the touch pad 160 by the second manipulation body 180, a process corresponding to the gesture (e.g., music playback) is executed in the audio device 220.

The overview of the information processing device 100 and the information processing method according to the present embodiment has been described.

### [3-3. Hardware Configuration of Information Processing Device]

Next, a hardware configuration of the information processing device 100 according to the present embodiment will be described in detail with reference to Figs. 6 and 7. Fig. 6 is an exploded perspective view showing a hardware configuration of the information processing device 100 according to the present embodiment. Fig. 7 is a block diagram showing the hardware configuration of the information processing device 100 according to the present embodiment.

As shown in Fig. 6, the information processing device 100 includes a display device 151 provided on a substrate 191, an information input device 153 provided at a display screen 151a of the display device 151 (a surface of the information processing device 100), and a touch pad 160 provided at a back surface of the display screen 151a of the display device 151 (a back surface of the information processing device 100).

Various parts, devices and the like used in the information processing device 100 are provided in the substrate 191. Specifically, devices such as a non-volatile memory 193, a random access memory (RAM) 195, a central processing unit (CPU) 197, and a network interface 199, which will be described using Fig. 7, are provided.

The display device 151. displays results obtained by various processes performed by the information processing device 100, as texts or images. The display device 151 constitutes a touch panel 150 together with the information input device 153, which will be described. A concrete example of the display device 151 includes, for example, a device capable of visually notifying a user of information, such as a liquid crystal display (LCD) or an organic electroluminescent (EL) display device.

The information input device 153 has a panel shape, and constitutes the touch panel 150 together with the display device 151. The information input device 153 detects a contact position of the first manipulation body 170 contacting a surface of the information input device 153 as a position of an input by the first manipulation body 170 on the display screen of the display device 151. The information input device 153 outputs input position information indicating the detected position of the input by the first manipulation body 170, as an information signal, to the CPU 197. A user of the information processing device 100 may input various data to the information processing device 100 or instruct the information processing device 100 to perform a processing operation by manipulating the information input device 153.

The touch pad 160 has a panel shape, similar to the information input device 153. The touch pad 160 detects a contact position of the second manipulation body 180 contacting a surface of the touch pad 160, as a position of an input by the second manipulation body 180 on the touch pad 160. The touch pad 160 outputs input position information indicating the detected position of the input by the second manipulation body 180, as an information signal, to the CPU 197. The user of the information processing device 100 may transmit various data to the output device 200 or instruct the output device 200 to perform a processing operation by manipulating the touch pad 160.

Next, a hardware configuration of the information processing device 100 according to the present embodiment will be described in further detail with reference to Fig. 7.

As shown in Fig. 7, the information processing device 100 further includes a non-volatile memory 193, a RAM 195, a CPU 137, and a network interface 199, in addition to the touch panel 150 (the display device 151 and the information input device 153) and the touch pad 160 described above.

The non-volatile memory (storage device) 193 is a data storage device formed as one example of a storage device of the information processing device 100, and includes a magnetic storage unit device such as a hard disk drive (HDD), a semiconductor storage device, an optical storage device, or a magneto-optical storage device. The non-volatile memory 193 stores programs executed by the CPU 197 or various data. In the present embodiment, the non-volatile memory 193 stores, for example, information on a layout, a zoom ratio or the like that is optimal when content data acquired from the web server 300 is displayed in the output device 200, to be associated with, for example, a domain having a URL of a storage destination of the content data.

The RAM 195 first stores programs used in the CPU 197, parameters changed in execution of the programs, and the like.

The CPU (control unit) 197 functions as an arithmetic processing device and a control device and controls an entire or partial operation of the information processing device 100 according to the various programs recorded in the non-volatile memory 193 and the RAM 195.

The network interface 199 is an interface for transmission and reception of various data to and from an external device, such as the output device 200 or the web server 300 via the network 400.

One example of a hardware configuration capable of embodying a function of the information processing device 100 according to the present embodiment has been shown. Each component may be configured of a general member or using hardware specific to a function of each component. Accordingly, a used hardware configuration may be appropriately changed according to a technique level used to embody the present embodiment.

### [3-4. Functional Configuration of Information Processing Device]

Next, a functional configuration of the information processing device 100 according to the present embodiment embodied by the above-described hardware configuration will be described with reference to Fig. 8. Fig. 8 is a block diagram showing a functional configuration of the information processing device 100 according to the present embodiment.

As shown in Fig. 8, the information processing device 100 includes an input position detection unit 103, a display control unit 105, an object specifying unit 107, a gesture detection unit 109, an output device selection unit 111, and a signal generation unit 115. In the present embodiment, the information processing device 100 further includes a device registration unit 101, a content data management unit 113, a layout adjustment unit 117, a storage unit 119, and a communication unit 121.

The device registration unit 101 registers the information processing device 100 and the output device 200 using a simple registration scheme such as Wi-Fi protected setup (WPS). This device registration enables the information processing device 100 and the output device 200 to access each other through a common protocol (e.g., DLNA) via a network. Here, a device registration scheme is not limited to the WPS, but may be any scheme as long as the scheme allows the information processing device 100 and the output device 200 to access each other. Further, the device registration unit 101 records registered device information indicating information on the registered external device (e.g., information such as a device name and an IP address) in the storage unit 119.

The input position detection unit 103 detects a position of an input by the first manipulation body 170 on the touch panel 150. Specifically, the input position detection unit 103 reads a position (point) at which the first manipulation body 170 (e.g., a thumb of the user of the information processing device 100) in the surface of the touch panel 150 contacts, as a coordinate. In this case, a manner in which the input position detection unit 103 detects the position of the contact by the first manipulation body 170 is not particularly limited, but may be any manner such as an electrostatic manner, a pressing manner, or an optical manner. For example, for the pressing manner, the input position detection unit 103 detects that pressure is applied to the touch panel 150 and reads a coordinate of a pressure-applied point. Further, the input position detection unit 103 may have a function of detecting that the first manipulation body 170 is in a space on the touch panel 150 close to the touch panel 150 instead of direct contact and recognizing a contact position. That is, the contact position cited herein may include position information for an operation performed to draw a blank on the screen of the touch panel 150 by the first manipulation body 170.

Further, the input position detection unit 103 sends the information on the detected contact position (more specifically, the coordinate of the contact position) as input position information to the display control unit 105 and the object specifying unit 107. For example, when the number of the detected contact position is 1, the input position detection unit 103 outputs one coordinate (X1, Y1) as the input position information. Further, when the number of the detected contact positions is 2, the input position detection unit 103 outputs a plurality of detected coordinates (X1, Y1) and (X2, Y2).

The display control unit 105 is a control means for controlling the content displayed on the touch panel 150. For example, the display control unit 105 reads object data such as a thumbnail image of any image data recorded in the storage unit 119, which will be described below, and displays the object data on the touch panel 150. In this case, the display control unit 105 designates a display position of the object for the touch panel 150 and displays the object data in the display position. Thereby, information indicating, for example, the display position of the object displayed on the touch panel 150 is held in the display control unit 105. The information indicating, for example, the display position of the object is sent from the display control unit 105 to the object specifying unit 107.

The input position information is input from the input position detection unit 103 to the display control unit 105. For example, when the first manipulation body 170 contacting the touch panel 150 moves, the input position information is input from the input position detection unit 103 to the display control unit 105 in real time. The display control unit 105 acquires an object such as a thumbnail of the moving image content held by the information processing device 100 from the storage unit 119, which will be described below, and displays the object on the display screen. Further, when the content data acquired from the web server 300 is sent from the content data management unit 113, which will be described below, the display control unit 105 displays an object corresponding to the content data on the display screen.

The object specifying unit 107 specifies a selected object, which is the object selected by the first manipulation body 170, based on the input position information and the display position information indicating the display position of the object. That is, the input position information from the input position detection unit 103 is input to the object specifying unit 107. Further, the display position information indicating the display position of the object from the display control unit 105 is also input to the object specifying unit 107. The object specifying unit 107 compares the input position information input from the input position detection unit 103 with the display position information input from the display control unit 105. The object specifying unit 107 specifies the object selected by the first manipulation body 170. This process enables the object specifying unit 107 to send information about, for example, an object of the selected content to the display control unit 105 and the content data management unit 113.

When a predetermined gesture is input to the touch pad 160, the gesture detection unit 109 detects the gesture. A concrete function of the gesture detection unit 109 is similar to the above-described function of the input position detection unit 103. That is, the gesture detection unit 109 detects a position of an input by the second manipulation body 180 on the touch pad 160. Specifically, the gesture detection unit 109 reads, as a coordinate, a position (point) at which the second manipulation body 180 (e.g., an index finger of the user of the information processing device 100) contacts a surface of the touch pad 160. In this case, a manner in which the gesture detection unit 109 detects the position of the contact by the second manipulation body 180 is not particularly limited, but may be any manner such as an electrostatic manner, a pressing manner, or an optical manner. For example, for the pressing manner the gesture detection unit 109 detects that pressure is applied to the touch pad 160, and reads a coordinate of a pressure-applied point. Further, the gesture detection unit 109 may have a function of detecting that the second manipulation body 180 is in a space on the touch pad 160 close to the touch pad 160 instead of a direct contact, and recognizing a contact position. That is, the contact position cited herein may include position information for an operation performed to draw a blank on the screen of the touch pad l60 by the second manipulation body 180.

Further, the gesture detection unit 109 sends, as gesture information, information on the detected contact position (more specifically, a coordinate of the contact position) or information on a direction or an amount of a change of the detected contact position over time to the output device selection unit 111, the signal generation unit 115 and the layout adjustment unit 117. For example, when the number of the detected contact position is 1, the input position detection unit 103 outputs one coordinate (X1, Y1) as input position information. Further, when the number of the detected contact positions is 2, the input position detection unit 103 outputs a plurality of detected coordinates (X1, Y1) and (X2, Y2). Further, the input position detection unit 103 outputs a vector indicating a change of a plurality of coordinates (X1, Y1) and (X2, Y2) detected within a predetermined time.

The output device selection unit 111 selects the output device 200 for outputting the content data corresponding to the selected object based on first gesture information indicating the gesture detected by the gesture detection unit 109. That is, the first gesture information indicating a gesture detected in a state in which a specific object has been selected by the first manipulation body 170 is input from the gesture detection unit 109 to the output device selection unit 111. Further, the output device selection unit 111 acquire information on registered devices capable of accessing the information processing device 100 and being accessed by the information processing device 100 (registered device information) from the storage unit 119. The output device selection unit 111 selects one output device 200 (e.g., television receiver 210) from among the registered output devices 200 (e.g., the television receiver 210 and the audio device 220) based on the first gesture information.

For example, the gesture detection unit 109 may detect a number of times a tap manipulation for the touch pad 160 is performed within a predetermined time. For example, when gesture information indicating that one tap manipulation for the touch pad 160 has been performed is input to the output device selection unit 111, the output device selection unit 111 may select the television receiver 210 as the output device 200. Further, when gesture information indicating that two tap manipulations for the touch pad 160 have been performed is input to the output device selection unit 111, the output device selection unit 111 may select the audio device 220 as the output device 200. Here, a judgment criterion used for the output device selection unit 111 to select the output device 200 is not limited to the scheme of selecting the output device 200 based on the tap number of the touch pad 160.

That is, for example, the display control unit 105 may display, for example, names of registered external devices on the display screen and the output device selection unit 111 may select the output device 200 from among the external devices according to a drag manipulation for the touch pad 160. Alternatively, for example, the output device 200 may be selected according to the number of fingers of the user simultaneously contacting the touch pad 160 (the television receiver 210 is selected when the number is 1 and the audio device 220 is selected when the number is 2). Further, it is assumed that the output device 200 is selected by the tap number. For example, when the touch pad is erroneously tapped twice even though the television receiver 210 is meant to be selected, user manipulability is not good. From the perspective of such user manipulability, selection of the output device 200 based on a drag manipulation or the number of fingers is desirable since the desired output device 200 can be immediately re-selected even when an erroneous manipulation is performed.

The above-described process enables the output device selection unit 111 to send information on a name, an IP address or the like of the selected output device 200 to the content data management unit 113 and the signal generation unit 115.

The content data management unit 113 performs acquisition of, for example, content data from the web server 300, transfer of the position information of the content data to the output device 200 selected by the output device selection unit 111, and the like. Here, a configuration of the content data management unit 113 will be described in detail with reference to Fig. 9. Fig. 9 is a block diagram showing a configuration of the content data management unit 113 according to the present embodiment.

As shown in Fig. 9, the content data management unit 113 mainly includes a content data acquisition unit 131, a selected content specifying unit 132, a position information extraction unit 133, an output device specifying unit 134, and a position information transfer unit 135. Further, the content data management unit 113 may include an input area detection unit 136 and a judgment unit 137, if necessary.

The content data acquisition unit 131 acquires predetermined content data, position information of the content data (e.g., a URL of a storage destination of the content data), and information on an application associated with the content data from the web server 300 via the communication unit 121. The content data acquisition unit 131 may record information such as the acquired content data in the storage unit 119. Further, the content data acquisition unit 131 may send the acquired content data to the display control unit 105 and display the content data on a display screen of the information processing device 100, for example, as a text or an image.

Information on, for example, the object selected by the first manipulation body 170 is input from the object specifying unit 107 to the selected content specifying unit 132. The selected content specifying unit 113 specifies content data corresponding to the object from the input information on the selected object. The selected content specifying unit 132 sends the information on the specified content data to the position information extraction unit 133.

The position information extraction unit 133 extracts the position information of the content data from the information on the selected content data input from the selected content specifying unit 132. This extracted position information of the selected content data may be held in the content data management unit 113 or stored in the storage unit 119. Further, the position information extraction unit 133 sends the extracted position information of the selected content data to the position information transfer unit 135.

Further, the information on the device selected as the output device 200 for outputting the content data corresponding to the object selected by the first manipulation body 170 (hereinafter, selected content data) is input from the output device selection unit 111 to the output device specifying unit 134. The output device specifying unit 134 specifies the output device 200 selected by the output device 200 based on the input information on the output device 200. Further, the output device specifying unit 134 sends the information on the specified output device 200 (e.g., a name or an IP address of the output device 200) to the position information transfer unit 135.

The position information transfer unit 135 sends the position information of the selected content data, which is input from the position information extraction unit 133, to the output device 200 specified by the output device specifying unit 134 via the communication unit 121.

Input position information indicating the contact position of the first manipulation body 170 on the touch panel 150 is input from the input position detection unit 103 to the input area detection unit 136. Input position information indicating the contact position of the second manipulation body 180 on the touch pad 160 is also input from the gesture detection unit 109 to the input area detection unit 136. The input area detection unit 136 divides an area on the touch panel 150 into a plurality of divided areas, and detects the divided area where the first manipulation body 170 is located based on the input position information input from the input position detection unit 103. The input area detection unit 136 also divides an area on the touch pad 160 into a plurality of divided areas, and detects the divided area where the second manipulation body 180 is located based on the input position information input from the gesture detection unit 109. Further, the contact position detection unit 136 sends first divided area information indicating the detected divided area where the first manipulation body 170 is located and second divided area information indicating the divided area where the second manipulation body 180 is located, to the judgment unit 137.

The judgment unit 137 judges whether the divided area where the first manipulation body 170 is located and the divided area where the second manipulation body 180 is located have a corresponding positional relationship based on the first divided area information and the second divided area information that are input from the input area detection unit 136. Here, the "corresponding positional relationship" refers to, for example, a positional relationship in which the divided area where the first manipulation body 170 is located in the touch panel 150 and the divided area where the second manipulation body 180 is located in the touch pad 160 are opposite to each other. In other words, the "corresponding positional relationship" refers to a relationship in which the divided area where the first manipulation body 170 is located and the divided area where the second manipulation body 180 is located are areas having the same coordinate in an XY coordinate plane. Further, the judgment unit 137 sends the result of the judgment to the position information transfer unit 135.

When the judgment result is input from the judgment unit 137, the position information transfer unit 135 determines whether to transfer the position information of the selected content. That is, when the judgment result indicating that the divided area where the first manipulation body 170 is located and the divided area where the second manipulation body 180 is located have a corresponding positional relationship is input, the position information transfer unit 135 transfers the position information of the selected content to the output device 200. On the other hand, when the judgment result indicating that the divided area where the first manipulation body 170 is located and the divided area where the second manipulation body 180 is located do not have a corresponding positional relationship is input, the position information transfer unit 135 does not transfer the position information of the selected content to the output device 200. In this case, a manipulation input to the touch pad 160 by the second manipulation body 180 is judged to be an erroneous manipulation.

Thus, the information processing device 100 having the input area detection unit 136 and the judgment unit 137 can prevent the position information of the selected content from being transferred to the output device 200 when the second manipulation body 180 erroneously contacts the touch pad 160 through an erroneous user manipulation.

The configuration of the content data management unit 113 has been described. Hereinafter, a functional configuration of the information processing device 100 will be further described with reference to Fig. 8.

The signal generation unit 115 generates a control signal for causing the selected output device 200 to execute a predetermined process based on the second gesture information indicating the gesture detected by the gesture detection unit 109 after the position information of the content data is transmitted to the output device 200. Details of the process are as follows.

For example, information on the selected content data of which the position information has been sent to the output device 200 or an associated application is input from the content data management unit 113 to the signal generation unit 115. Information on the selected output device 200 is also input from the output device selection unit 111 to the signal generation unit 115. Further, gesture information indicating the gesture input to the touch pad 160 is input from the gesture detection unit 109 to the signal generation unit 115.

When the gesture information is input from the gesture detection unit 109 after the position information of the selected content data is sent to the output device 200, the signal generation unit 115 recognizes content of a gesture corresponding to the gesture information. For example, when the gesture information is information indicating that the number of a contact position of the second manipulation body 180 contacting the touch pad 160 within a predetermined time is 1 (e.g., coordinate (X1, Yl)), it is recognized that a tap manipulation for the touch pad 160 is performed once. Further, for example, when the gesture information is information indicating that the contact position of the second manipulation body 180 contacting the touch pad 160 within a predetermined time moves from a coordinate (X1, Y1) to a coordinate (X2, Y2), it is recognized that a drag manipulation has been performed on the touch pad 160.

Next, the signal generation unit 115 generates a control signal for causing the output device 200 to execute a process assigned to the gesture based on the gesture information (content of the recognized gesture) input from the gesture detection unit 109. For example, one tap manipulation after the position information of the selected content data is transmitted is assigned a content playback process, and the drag manipulation is assigned a volume adjustment process. In this case, when the gesture information input from the gesture detection unit 109 relates to one tap manipulation after the position information of the selected content data is sent, the signal generation unit 115 generates a control signal for causing the output device 200 to execute a playback process for the selected content data. Further, thereafter, when the gesture information input from the gesture detection unit 109 relates to the drag manipulation, the signal generation unit 115 generates a control signal for causing the output device 200 to execute a playback volume adjustment process for the selected content. Further, content of the process assigned to each gesture may be stored, for example, in the storage unit. 119 so that the gesture content and the process content are associated with each other.

The layout adjustment unit 117 adjusts a layout when the selected content is displayed in the output device 200 based on the gesture detected by the gesture detection unit 109. Specifically, the layout adjustment unit 117 acquires, from the output device 200, display control information that is information for control of a display in the output device 200, such as a size, a resolution and the like of the display screen of the output device 200. The layout adjustment unit 117 holds the acquired display control information or records the display control information in the storage unit 119. Further, the layout adjustment unit 117 generates a signal for instructing a scroll, zoom or the like for adjusting the layout on the display screen of the content data displayed on the output device 200 based on the display control information and the gesture information, and transmits the signal to the output device 200.

For example, the layout is freely available in the web content. Thereby, even when the output device 200 directly plays the selected content based on the content position information such as the transferred URL, the content is not limited to being displayed at a center of the display screen in an optimal zoom ratio. Accordingly, the layout adjustment as described above is necessary.

It is assumed herein that the selected content data is displayed on the output device 200. In this case, the gesture information indicating content of detecting that a gesture such as drag, pinch or pinch-out is input to the touch pad 160 is input from the gesture detection unit 109 to the layout adjustment unit 117. Then, for example, when there is an input of a drag manipulation, the layout adjustment unit 117 generates a signal for instructing scroll in the display screen of the output device 200 based on a drag distance and direction and the display control information (e.g., a display screen size) and transmits the signal to the output device 200. Further, for example, when there is an input of a pinch-out manipulation, the layout adjustment unit 117 generates a signal for instructing zoom out in the display screen of the output device 200 based on a pinch-out distance and the display control information (e.g., the display screen size), and transmits the signal to the output device 200. Further, the layout adjustment unit 117 may record a preset position of a display of the content data after the layout adjustment or layout information about, for example, a zoom ratio in the storage unit 119.

Further, the layout information is often common in the same web content. The output device 200 records the layout information after the layout adjustment, for example, for each website or domain, which enables playback to be automatically performed with an optimal content layout when the output device 200 plays the same web content later. That is, when the layout adjustment has been performed, the layout information is recorded to be associated with, for example, the position information of the content (e.g., a URL of a main page of a website of a content storage destination or a domain of the content storage destination) in the output device 200. The output device 200 uses the stored layout information when displaying contents in the same website or contents having the same domain, thereby automatically performing playback with an optimal content layout.

In this case, the layout adjustment unit 117 may select an application condition for the layout information stored in the output device 200 according to the gesture information input from the gesture detection unit 109 when the output device 200 plays the selected content. The application condition includes, for example, "(1) the stored layout information is not applied," "(2) the stored layout information is applied when contents are in the same website," and "(3) the stored layout information is applied when contents are in the same domain." Here, different gestures are assigned to the respective application conditions. Each application condition may be assigned a gesture, such as the application condition (1) when the number of the second manipulation body 180 (e.g., the number of fingers of the user) contacting the touch pad 160 is 1, the application condition (2) when the number is 2, and the application condition (3) when the number is 3. The layout adjustment unit 117 transmits application condition information indicating the application condition selected according to the gesture information input from the gesture detection unit 109 to the output device 200.

A trigger by which the layout adjustment unit 117 selects the application condition for the layout information includes, for example, the following. A display asking if the layout information stored in the output device 200 is to be applied to the display screen of the output device 200 when the output device 200 receives the position information of the selected content data may be considered. A user having viewed this display inputs a predetermined gesture to the touch pad 160 using the second manipulation body 180, and the layout adjustment unit 117 selects the application condition for the layout information based on this gesture.

The object data displayed on the touch panel 150 is stored in the storage unit 119. The object data cited herein includes, for example, any parts constituting a graphical user interface (hereinafter, GUI), such as icons, buttons, and thumbnails. Further, object data of content capable of being played by the information processing device 100 may be stored in the storage unit 119. Each object data is also stored to be associated with attribute information in the storage unit 119. The attribute information includes, for example, creation date, update date, creating person name and updating person name for object data or entity data, a type of the entity data, a size, importance and priority of the entity data, and the like.

Further, entity data corresponding to the object data is also stored to be associated with each other in the storage unit 119. The entity data cited herein is data corresponding to a predetermined process executed when the object displayed on the touch panel 150 is manipulated. For example, the object data corresponding to the moving image content is associated with content data of the moving image content as the entity data. Further, an application for playing stored content is stored to be associated with the object data, the content data, or the attribute information in the storage unit 119.

The object data stored in the storage unit 119 is read by the display control unit 105 and displayed on the touch panel 150. Further, registered device information about a registered device registered by the device registration unit 101 is also registered in the storage unit 119. Further, layout information about a preset position or a zoom ratio when the selected content is displayed on the output device 200 is stored in the storage unit 119.

Further, the storage unit 113 may appropriately store various parameters or intermediate process results required to be held when the information processing device 100 performs any process, or various databases, as well as the above data. Reading and writing may be freely performed on this storage unit 119 by the device registration unit 101, the input position detection unit 103, the display control unit 105, the object specifying unit 107, the gesture detection unit 109, the output device selection unit 111, the content data management unit 113, the signal generation unit 115, the layout adjustment unit 117, and the like.

The communication unit 121 is connected to, for example, the Internet 400 or a home network between the information processing device and the output device 200, and transmits and receives data to and from external devices in the information processing device 100 (in the present embodiment, the output device 200 and the web server 300).

One example of the function of the information processing device 100 according to the present embodiment has been shown. Each component may be formed of a general member or circuit or of hardware specific to a function of each component. Further, the functions of all components may be performed by the CPU. Accordingly, a used configuration may be appropriately changed according to an occasional technique level embodying the present embodiment.

Further, a computer program for embodying each function of the information processing device 100 according to each embodiment of the present invention as described above may be created and installed, for example, in a personal computer.

### [3-5. Information Processing Method]

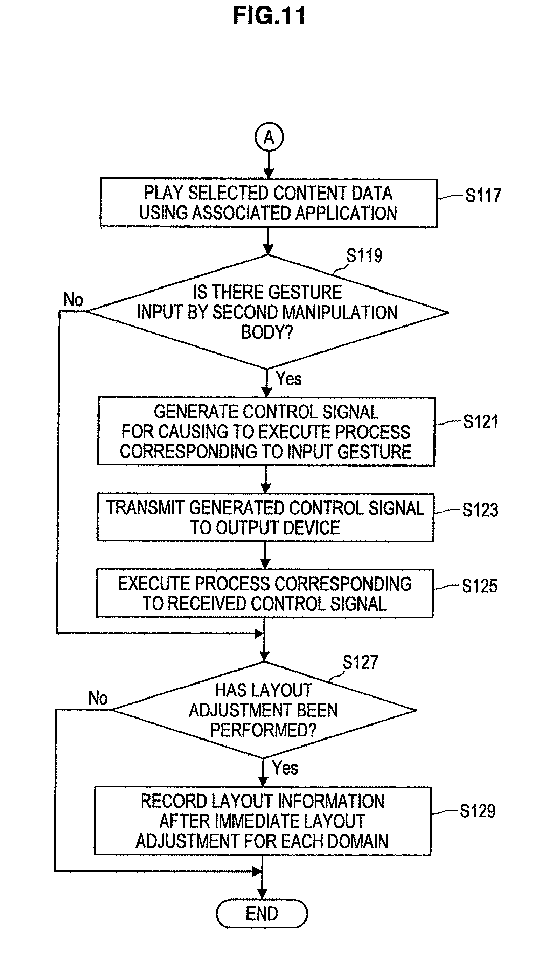

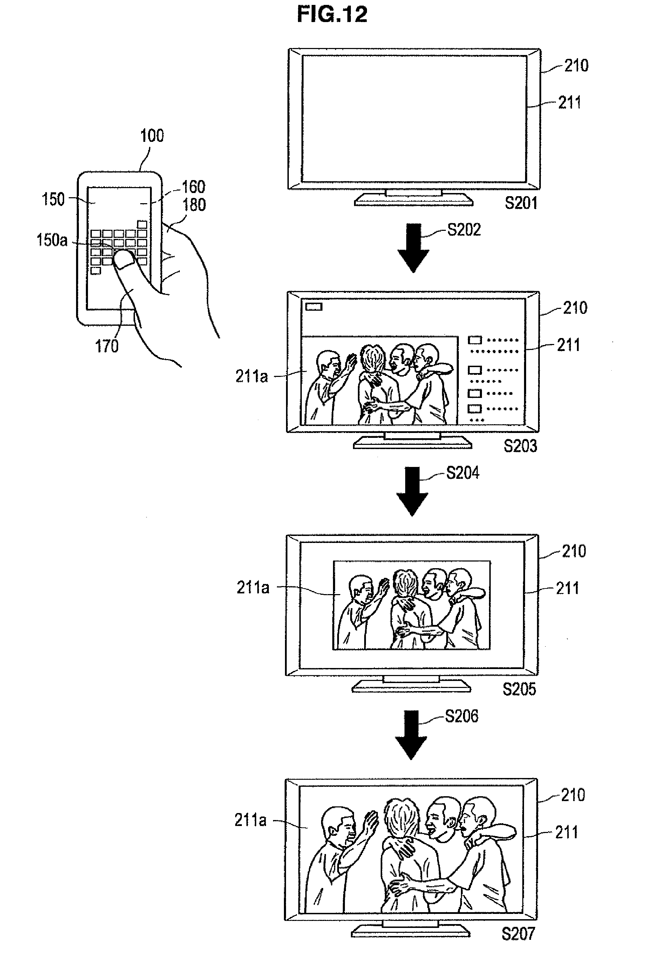

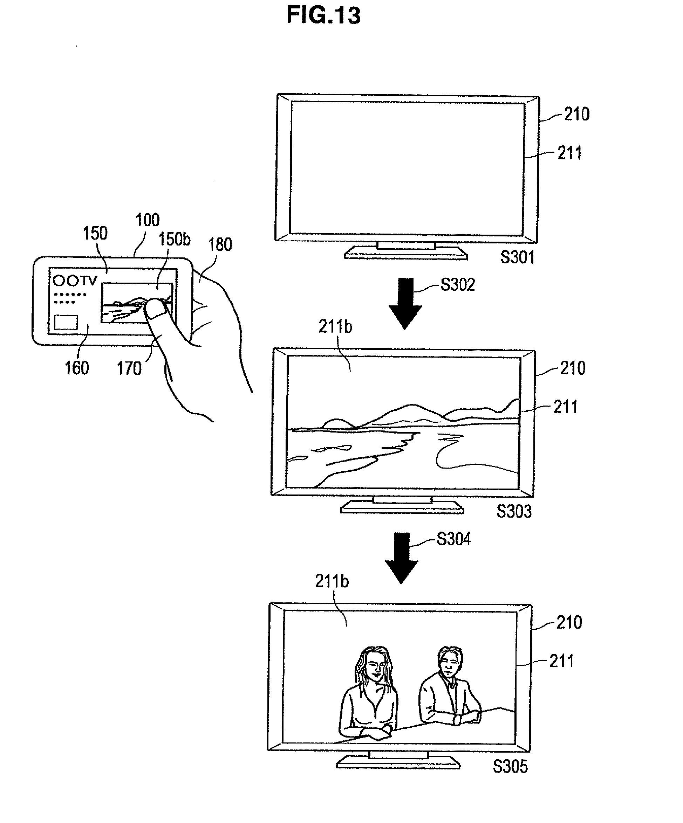

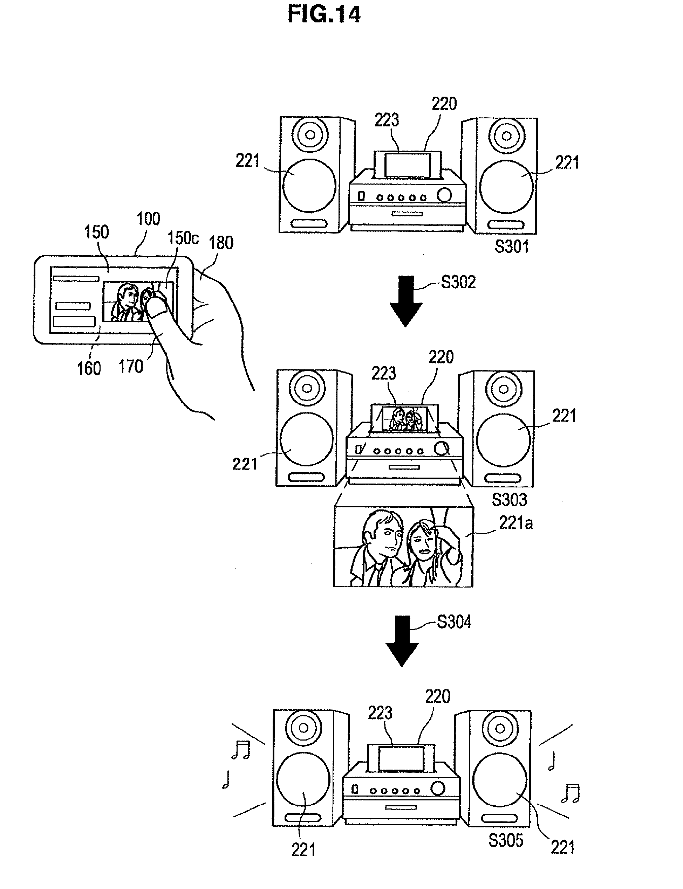

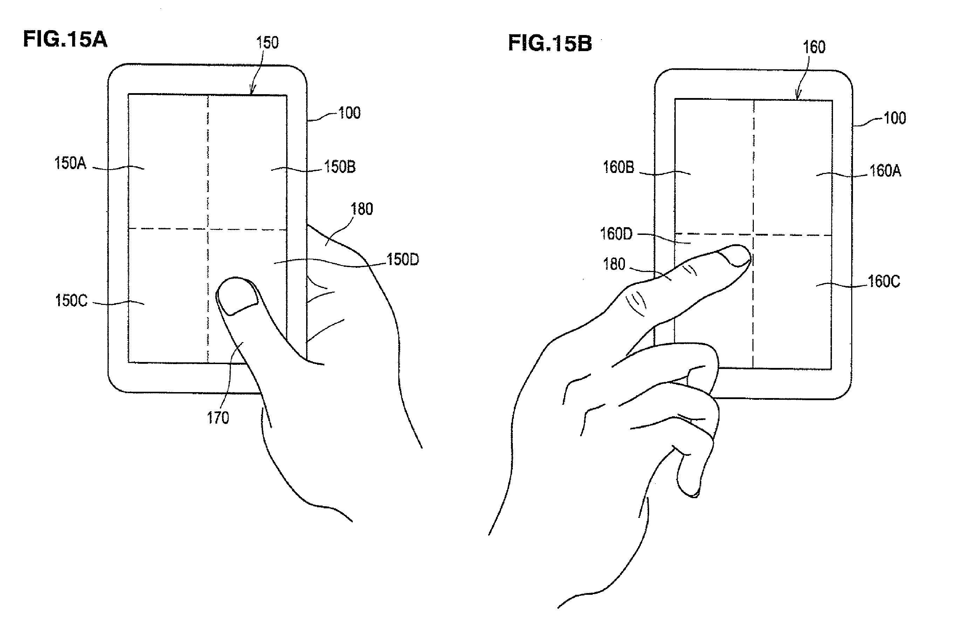

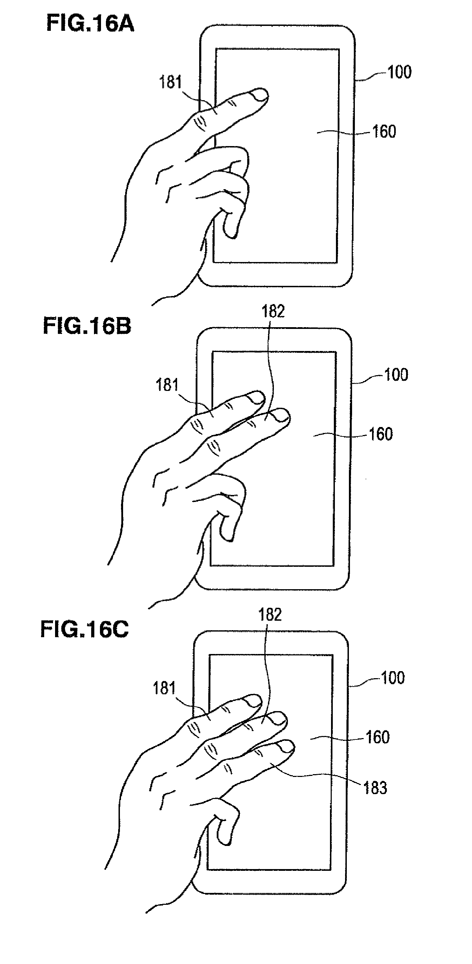

Next, a flow of a process of the information processing method using the information processing device 100 having the above-described configuration according to the present embodiment will be described in detail with reference to Figs. 10 to 16. Figs. 10 and 11 are flowcharts showing a flow of a process of the information processing method according to the present embodiment. Fig. 12 is an illustrative diagram showing a first example in which the information processing method according to the present embodiment is applied. Fig. 13 is an illustrative diagram showing a second example in which the information processing method according to the present embodiment is applied. Fig. 14 is an illustrative diagram showing a third example in which the information processing method according to the present embodiment is applied. Fig. 15 is an illustrative diagram showing a modified example of the information processing method according to the present embodiment. Fig. 16 is an illustrative diagram showing a modified example of the information processing method according to the present embodiment.

The information processing method according to the present embodiment includes the following steps.
(1) an input position detection step of detecting a position of an input by the first manipulation body 170 on the display screen of the display device 151 (the touch panel 150) on which a predetermined object is displayed
(2) an object specifying step of specifying a selected object that is the object selected by the first manipulation body 170 based on input position information indicating the input position of the first manipulation body 170 and display position information indicating a display position of the object
(3) a gesture detection step of detecting a predetermined gesture input by the second manipulation body 180 in a state in which the selected object is selected by the first manipulation body 170
(4) an output device selection step of selecting the output device 200 that is an external device for outputting content data corresponding to the selected object based on first gesture information indicating the gesture detected by the gesture detection step (3)
(5) a position information transmission step of transmitting position information of the content data (the selected content data) corresponding to the selected object to the output device 200
(6) a signal generation step of generating a control signal for causing the selected output device 200 to execute a predetermined process based on second gesture information indicating a gesture detected after the position information of the selected content data is transmitted to the output device 200.

Hereinafter, the information processing method including steps (1) to (6) according to the present embodiment will be described in detail.

As shown in Fig. 10, first, the information processing device 100 and desired external devices (e.g., the television receiver 210 and the audio device 220) are registered, for example, by a simple registration scheme such as WPS (S101). Accordingly, the information processing device 100 and the registered external devices (e.g., the television receiver 210 and the audio device 220) can access each other through a common protocol via the network.

Next, the information processing device 100 accesses the web server 300 via the network 400 such as the Internet, acquires any content data, and displays the web content on the touch panel 150. Further, any content desired to be output to the registered external device is tapped by the first manipulation body 170 (e.g., a user's thumb).

For example, when the content desired to be output to the external device is photograph content in a photo-sharing service on the web server 300 as shown in Fig. 12, a plurality of objects (thumbnail images) are displayed on the touch panel 150 of the information processing device 100. One object 150a among the objects is tapped by the first manipulation body 170 (e.g., a user's thumb) (S202). Further, when the content desired to be output to the external device is moving image content in a moving image distribution service on the web server 300 as shown in Fig. 13, a web page in the service is displayed on the touch panel 150 of the information processing device 100. An object 150b corresponding to the moving image content in the web page is tapped by the first manipulation body 170 (5302). Further, when the content desired to be output to the external device is music content in a music distribution service on the web server 300 as shown in Fig. 14, a web page in the service is displayed on the touch panel 150 of the information processing device 100. The object 150b corresponding to the music content in the web page is tapped by the first manipulation body 170 (S402).

Then, the input position detection unit 103 detects a position tapped by the first manipulation body 170 (an input position) (Sl03). Further, the object specifying unit 107 specifies the object selected by the first manipulation body 170 (selected object) based on the input position detected in step S103 and the display position information acquired from the display control unit 105 (S105). For example, the object specifying unit 107 specifies the object 150a in the example of Fig. 12, the object 150b in the example of Fig. 13, and the object 150c in the example of Fig. 14, as the selected object.

Next, the gesture detection unit 103 judges whether a tap input to the touch pad 160 is detected while the selected object is continuously tapped by the first manipulation body 170, that is, in a state in which a predetermined object on the touch panel 150 has been selected (S107). For example, the gesture detection unit 109, in the example of Fig. 12,budges whether a tap input to the touch pad 160 by the second manipulation body 180 (e.g., a user's index finger) is detected in a state in which the object 150a has been selected.

Here, for example, when a plurality of devices (e.g., the television receiver 210 and the audio device 220) are registered as external devices, a target (the selected output device 200) to which the selected content is output is switched based on, for example, a number of times the touch pad 160 is tapped. For example, when the tap number for the touch pad 160 is 1, the output target is the television receiver 210 and when the tap number is 2, the output target is the audio device 220. Further, it is assumed in the above steps that nothing is displayed on the display screen 211 of the television receiver 210 or the display screen 223 of the audio device 220 (S201, S301 and S401 of Figs. 12 to 14) in the example of any of Figs. 12 to 14.

When it is judged in step S107 that the gesture detection unit 109 does not detect the tap input to the touch pad 160, the information processing device 100 returns to step S103 and waits until the position of an input by the first manipulation body 170 is detected. On the other hand, when it is determined in step S107 that the gesture detection unit 109 detects the tap input to the touch pad 160, the output device selection unit 111 selects the output device 200 to which the selected content is to be output, for example, based on the tap number of the tap input (S109).

Next, the content data management unit 113 sends the position information (URL) of the selected content data corresponding to the object tapped by the first manipulation body 170 to the output device 200 selected in step S109 via the network (S111). Further, the network cited herein is a network (e.g., home network) with a protocol common to the external device registered in step 5101, and differs from a network (e.g., the Internet) used for communication with, for example, the web server 300.

Now, a modified example of the present embodiment will be described with reference to Fig. 15. In the present modified example, the position information transfer unit 135 sends the URL of the selected content data to the output device 200 only when the position of the first manipulation body 170 on the touch panel 150 and the position of the second manipulation body 180 on the touch pad 160 have a corresponding positional relationship. That is, as shown in Fig. 15, the input area detection unit 136 divides an area of the touch panel 150 into a plurality of divided areas (in the example of Fig. 15, four divided areas 154A, 154B, 150C and 150D). Further, the input area detection unit 136 also divides an area on the touch pad 160 into a plurality of divided areas (in the example of Fig. 15, four divided areas 160A, 160B, 160C and l60D). Here, for example, the divided area 150A on the touch panel 150 and the divided area 160A on the touch pad 160 have the corresponding positional relationship. Further, the "corresponding positional relationship" cited herein refers to, for example, a relationship in which a divided area where the first manipulation body 170 is located in the touch panel 150 and a divided area where the second manipulation body 180 is located in the touch pad 160 are opposite to each other. In other words, the "corresponding positional relationship" refers to a relationship in which the divided area where the first manipulation body 170 is located and the divided area where the second manipulation body 180 is located are areas having the same coordinates in the XY coordinate plane.

Next, the input area detection unit 136 detects the divided area where the first manipulation body 170 is located based on the input position information input from the input position detection unit 103. In the example of Fig. 15, since the first manipulation body 170 is located on the divided area 150D, the input area detection unit 136 detects that the first manipulation body 170 is located in the divided area 150D. Further, the input position detection unit 136 detects the divided area where the second manipulation body 180 is located based on the input position information input from the gesture detection unit 109. In the example of Fig. 15, since the second manipulation body 180 is located on the divided area 160D, the input area detection unit 136 detects that the second manipulation body 180 is located in the divided area 160D.

Next, the judgment unit 137 judges whether the divided area where the first manipulation body 170 is located and the divided area where the second manipulation body 180 is located have a corresponding positional relationship based on the detection result input from the input area detection unit 136. In the example of Fig. 15, when the first manipulation body 170 is located in the divided area 150D and the second manipulation body 180 is located in the divided area 160D, the judgment unit 137 judges the divided areas where the first manipulation body 170 and the second manipulation body 180 are located have the corresponding positional relationship.

Further, the position information transfer unit 135 determines whether to transfer the position information of the selected content when the judgment result is input from the judgment unit 137. That is, when the judgment result indicating that the divided area where the first manipulation body 170 is located and the divided area where the second manipulation body 180 is located have the corresponding positional relationship is input, the position information transfer unit 135 transfers the position information of the selected content to the output device 200. On the other hand, when the judgment result indicating that the divided area where the first manipulation body 170 is located and the divided area where the second manipulation body 180 is located do not have a corresponding positional relationship is input, the position information transfer unit 135 does not transfer the position information of the selected content to the output device 200. In this case, it is judged that the manipulation input to the touch pad 160 by the second manipulation body 180 is an erroneous manipulation. In the example of Fig. 15, since the divided areas where the first manipulation body 170 and the second manipulation body 180 are located have the corresponding positional relationship, the position information transfer unit 135 transfers the position information of the selected content to the output device 200.

Thus, the information processing device 100 having the input area detection unit 136 and the judgment unit 137 can prevent the position information of the selected content from being transmitted to the output device 200 when the second manipulation body 180 erroneously contacts the touch pad 160 by an erroneous user manipulation.

Further, the information processing method according to the present embodiment will be further described. The output device 200 having received the URL of the selected content data accesses a website on the web server 300 having the URL based on the received URL, and acquires the selected content data (S111). In this case, for example, layout information such as a preset position of the object displayed on the display screen or a zoom ratio is stored in the output device 200 for each domain having the URL of the content data sent to the output device 200. The output device 200 applies the stored layout information in a step of initiating a connection to the web server 300 (S115).

The process of step S115 is performed for the following reason. That is, the layout is freely available in the web content. Thereby, even when the output device 200 directly plays the selected content based on the content position information such as the transferred URL, the content is not limited to being displayed at a center of the display screen in an optimal zoom ratio. Meanwhile, the content display layout is often common in the same web content. Accordingly, storing, in the output device 200, the layout information when the layout is adjusted at the information processing device 100 allows the content to be played with an optimal layout thereafter. This will be described in detail using the example of Fig. 12.

Fig. 12 shows an example in which a photo-sharing service in the web server 300 is displayed on the touch panel 150 of the information processing device 100 and content data (photo image data) corresponding to an object selected from among displayed objects is output to the output device 200.

As shown in Fig. 12, when the process of transferring the URL of the selected content data from the information processing device 100 to the output device 200 is performed in step S111, a high resolution photo image of a link destination based on the received URL is displayed in the output device 200 in the process of steps S113 and S115 (S203). However, in this step (S203), a title bar or other related information in a site of the photo-sharing service are also displayed together with the photo image 211a corresponding to the selected object on the display screen 211. In this case, when a gesture is input to the touch pad 160 by the second manipulation body 180, for example, when a gesture such as a drag is input to the touch pad 160 (S204), a focal position of the photo image 211a moves according to this gesture input (S205). Further, for example, when a gesture such as pinch-out or pinch-in is input to the touch pad 160 by the second manipulation body 180 (S206), zoom of the photo image 211 a is performed according to this gesture input (S207). This process enables the photo image 211a to be adjusted in an optimal display position and zoom ratio. For example, when contents are in the same photo-sharing site, a high resolution photograph layout is common. Thereby, the output device 200 stores the layout information after the layout adjustment and applies the stored layout information when another photo image is output to the output device 200 later, thereby displaying the image with an optimal layout on the display screen 211.

Further, an approximately rectangular shape (e.g., a rectangle having the same size as the display screen 211) may be automatically detected around the selected content (e.g., photo image), and a content display position or a zoom ratio may be automatically adjusted together with the detected rectangle.

Further, in this case, when the output device 200 plays the selected content, the layout adjustment unit 117 of the information processing device 100 may select an application condition of the layout information stored in the output device 200 according to the gesture information input from the gesture detection unit 109. The application condition includes, for example, "(1) the stored layout information is not applied," "(2) the stored layout information is applied when contents are in the same website," and "(3) the stored layout information is applied when contents are in the same domain." Here, different gestures are assigned to the respective application conditions. For example, when the second manipulation body 180 contacting the touch pad 160 is only a manipulation body 181 (only a user's index finger) as shown in Fig. 16(a), the layout adjustment unit 117 applies the application condition (1). Further, for example, when the second manipulation body 180 contacting the touch pad 160 is two of the manipulation body 181 and a manipulation body 182 (the user's index and middle fingers) as shown in Fig. 16(b), the layout adjustment unit 117 applies the application condition (2). Further, for example, when the second manipulation body 180 contacting the touch pad 160 is three of the manipulation body 181, the manipulation body 182 and a manipulation body 183 (the user's index, middle and ring fingers) as shown in Fig. 16(c), the layout adjustment unit 117 applies the application condition (3). The layout adjustment unit 117 transmits application condition information indicating the application condition selected according to the gesture information input from the gesture detection unit 109, to the output device 200.

A trigger by which the layout adjustment unit 117 selects the application condition for the layout information includes, for example, the following. A display for asking if the layout information stored in the output device 200 is to be applied to the display screen of the output device 200 when the output device 200 receives the position information of the selected content data may be considered. A user having viewed this display inputs a predetermined gesture to the touch pad 160 using the second manipulation body 180, and the layout adjustment unit 117 selects the application condition for the layout information based on this gesture.

Further, the information processing method according to the present embodiment will be further described with reference to Fig. 11. The output device 200 starts up an application (e.g., usually, a web browser) associated with the selected content data acquired in step S113 and plays the selected content (S117). A judgment as to a type of the associated application is made, for example, based on a file name of played content data (in particular, an extension such as "wma" or "mpg").

The gesture detection unit 109 then judges whether a gesture input to the touch pad 160 by the second manipulation body 180 is detected (S119). This judgment may be made, for example, within a predetermined set time or may be terminated, for example, according to the gesture input by the second manipulation body 180. When it is judged in step S119 that the gesture input by the second manipulation body 180 has not been detected, the method proceeds to a process of step S127, which will be described below. On the other hand, when it is determined in step S119 that the gesture input by the second manipulation body 180 has been detected, the signal generation unit 115 generates a control signal for causing the output device 200 to execute a process corresponding to the input gesture (S121). The signal generation unit 115 transmits the generated control signal to the output device 200 (S123), and the output device 200 having received this signal executes a process corresponding to the received control signal (S125).

For example, when the content displayed on the television receiver 210 is web content such as a photo image in the photo-sharing service as in the example of Fig. 12, the gesture in the touch pad 160 is a manipulation that can be realized only by a relative finger movement. Specifically, for example, when a drag manipulation in up, down, left and right directions is input to the touch pad 160, the gesture detection unit 109 detects that the drag manipulation is input. The signal generation unit 115 generates a control signal to instruct to perform scroll on the web page displayed on the display screen 211 based on the result of the detection.

Further, when the content displayed on the television receiver 210 is moving image content in a moving image distribution service as in the example of Fig. 13, a manipulation for the moving image content played by the television receiver 210 is performed by the gesture input to the touch pad 160. Specifically, for example, when a drag manipulation in up, down, left and right directions, a drag manipulation in left and right directions, a simple tap manipulation or the like is input to the touch pad 160, the gesture detection unit 109 detects that the gesture manipulation is input. The signal generation unit 115 generates a control signal to instruct to perform a manipulation for the moving image content displayed on the display screen 211 based on the result of the detection. As this manipulation, for example, playback volume change may be considered when there is the drag manipulation in up, down, left and right directions, fast forward and rewind may be considered when there is the drag manipulation in left and right directions, and pause and play may be considered when there is the simple tap manipulation. Thus, in the present embodiment, the manipulation for the touch pad 160 is mainly a manipulation completed with target content (content output to the output device 200).

Further, when content played by the audio device 220 is music content in a music distribution service as in an example of Fig. 14, a manipulation for the music content played by the audio device 220 is performed by a gesture input to the touch pad 160. When music content or moving image content (only sound) is output to the audio device 220, the music played by the audio device 220 may be controlled (e.g., playback) irrespective of a manipulation for the information processing device 100. For example, an audio device has already been widely used as an external speaker for a mobile device by a technique such as Bluetooth (registered trademark). However, in this case, since sound of the audio device is synchronized with sound of the mobile device, it is difficult to listen to music on a browser while other music is being output through the speaker of the audio device. On the other hand, in the present embodiment, a connection to the web server 300 or playback of acquired content (sound output from the speaker 221) is independently performed at the output device 200 such as the audio device 200, and the information processing device 100 only transmits a URL of the content or a control signal. Accordingly, it is possible to play different music on the audio device and the mobile device without a separate device or additional processing cost.

There is a method of enabling a manipulation on a web page to be performed at the audio device (e.g., with a screen display mechanism such as an LCD), and playing web content at the audio device. However, it is difficult to embody navigation on the web content in the audio device, and there is a burden of cost for parts. Accordingly, labor division in which the navigation of the web content is performed at the information processing device 100 and content such as music is played back at the output device 200 such as the audio device 220 is effective in terms of the part cost and device simplification.

Finally, it is judged whether a layout adjustment for the content currently played by the output device 200 has been performed (S127). When it is judged that the layout adjustment has been not performed, the process is terminated after content playback is terminated. On the other hand, when it is judged in step S127 that the layout adjustment has been performed, layout information such as a preset position or zoom ratio after immediate layout adjustment is recorded to be associated, for example, with a domain having a URL (S129), and the process is terminated. The recorded layout information is applied when other content is played back in the output device 200, if necessary.

As described above, in the information processing method according to the present embodiment, a labor-division manipulation utilizing characteristics of the respective devices occurs. Specifically, a process requiring a complex manipulation, for example, navigation between web contents, is performed at the information processing device 100. On the other hand, viewing of content completed with a simple manipulation but desired to be viewed on a large screen, such as web moving images or new articles, is performed at the output device 200.

### <4.Conclusion>

As described above, the information processing device 100 according to the present embodiment is a mobile device having the touch panel 150 mounted on one surface thereof and the touch pad 160 mounted on the other surface (e.g., back surface) thereof. In the information processing device 100, a manipulation on the screen of the information processing device 100 is performed in the touch panel 150, and a manipulation on the screen of the output device 200 capable of being connected with the information processing device 100, for example, via a home network is performed in the touch pad 160. Accordingly, manipulations on the display screens of the two devices (the information processing device 100 and the output device 200) can be simultaneously performed using one device (the information processing device 100). Further, according to the present embodiment, for example, a complex manipulation such as a navigation of web content, is performed by the information processing device 100 for which a touch manipulation is easy, and the content output is performed by the output device 200, which can be coordinated seamlessly.

With the information processing device 100, the information processing method and the program according to the present embodiment, the following effects (1) to (3) can be mainly obtained.
(1) Navigation requiring a complex manipulation in web content and content playback that can be realized by a simple manipulation but requires a large screen or excellent sound quality are performed by separate specialized devices (the information processing device 100 and the output device 200), respectively, and can be simultaneously controlled.
(2) In the present embodiment, content URL transfer by a coordinated gesture manipulation of the touch panel 150 and the touch pad 160 of the information processing device 100, a manipulation of the information processing device 100 on the touch panel 150, a manipulation of the output device 200 on the touch pad 150, and a manipulation in a hardware level are separate. Thereby, it is possible to relatively simply provide intuitive manipulations to a user and improve user convenience.
(3) The present embodiment can be embodied using a general technique, such as a browser and WPS, or a structure useful for web content that is simple and has a common layout, in which scroll and zoom positions are held for each domain. Thereby, there is no cost of newly installing an independent system in a system according to a related art.

The preferred embodiments of the present invention have been described above with reference to the accompanying drawings, whilst the present invention is not limited to the above examples, of course. A person skilled in the art may find various alternations and modifications within the scope of the appended claims, and it should be understood that they will naturally come under the technical scope of the present invention.

### Reference Signs List

- 100: information processing device
- 101: device registration unit
- 103: input position detection unit
- 105: display control unit
- 107: object specifying unit
- 109: gesture detection unit
- 111: output device selection unit
- 113: content data management unit
- 115: signal generation unit
- 117: layout adjustment unit
- 119: storage unit
- 135: position information transfer unit
- 136: input area detection unit
- 137: judgment unit
- 150: touch panel
- 160: touch pad
- 170: first manipulation body
- 180: second manipulation body

## Claims

1. An information processing device comprising:
a display device on which a predetermined object is displayed;
an input position detection unit provided at a display screen side of the display device, for detecting a position of an input by a first manipulation body on the display screen;
an object specifying unit for specifying a selected object that is the object selected by the first manipulation body based on input position information indicating the input position and display position information indicating a display position of the object;
a gesture detection unit provided at a back side of the display screen of the display device, for detecting a predetermined gesture when the predetermined gesture is input by a second manipulation body;
an output device selection unit for selecting an output device that is an external device for outputting content data corresponding to the selected object based on first gesture information indicating the gesture detected by the gesture detection unit; and
a signal generation unit for generating a control signal for causing the selected output device to execute a predetermined process based on second gesture information indicating a gesture detected after position information of the content data is transmitted to the output device.

2. The information processing device according to claim 1, further comprising a position information transfer unit for transferring the position information of the content data corresponding to the selected object to the output device selected by the output device selection unit.

3. The information processing device according to claim 2, wherein the gesture detection unit is capable of detecting a position of an input by the second manipulation body on the back surface of the display screen,
the information processing device further comprises:
an input area detection unit for dividing an area of the display screen and an area on the back surface of the display screen into a plurality of divided areas, respectively, and detecting the divided area on the display screen where the first manipulation body is located and the divided area on the back surface of the display screen where the second manipulation body is located based on first input position information indicating the input position of the first manipulation body input from the input position detection unit and second input position information indicating the input position of the second manipulation body input from the gesture detection unit; and
a judgment unit for judging whether the divided area where the first manipulation body is located and the divided area where the second manipulation body is located have a corresponding positional relationship based on first divided area information indicating the divided area where the first manipulation body is located and second divided area information indicating the divided area where the second manipulation body is located, and
the position information transfer unit transfers the position information only when it is determined by the judgment unit that the divided area where the first manipulation body is located and the divided area where the second manipulation body is located have a corresponding positional relationship.

4. The information processing device according to claim 1, further comprising a layout adjustment unit for acquiring display control information from the output device, the display control information being information for controlling display of content data corresponding to the selected object on the output device, and generating an instruction signal for adjusting a layout of the content data in the display screen of the output device based on the acquired display control information and third gesture information indicating the gesture detected by the gesture detection unit after the content data is displayed on the output device.

5. The information processing device according to claim 4, wherein, when layout adjustment is performed in displaying one content data, the output device stores layout information about the layout of the content data after the layout adjustment, to be associated with the position information of the content data, and
the layout adjustment unit transmits, to the output device, application condition information indicating an application condition for the layout information associated with the position information of the content data stored in the output device, when the output device displays another content data, according to gesture information input from the gesture detection unit.

6. The information processing device according to claim 1, further comprising a device registration unit for performing, on an external device, a device registration process in which the external device and the information processing device are allowed to access each other through a protocol common to the external device and the information processing device via a network,
wherein the output device selection unit selects the output device from among the external devices subjected to the device registration process.

7. An information processing method comprising:
an input position detection step of detecting a position of an input by a first manipulation body on a display screen of a display device on which a predetermined object is displayed;
an object specifying step of specifying a selected object that is the object selected by the first manipulation body based on input position information indicating the input position and display position information indicating a display position of the object;
a gesture detection step of detecting a predetermined gesture input by a second manipulation body in a state in which the selected object is selected by the first manipulation body;
an output device selection step of selecting an output device that is an external device for outputting content data corresponding to the selected object based on first gesture information indicating the gesture detected in the gesture detection step;
a position information transmission step of transmitting position information of the content data to the output device; and
a signal generation step of generating a control signal for causing the selected output device to execute a predetermined process based on second gesture information indicating a gesture detected after the position information of the content data is transmitted to the output device.

8. A program for causing a computer to function as an information processing device, the information processing device comprising:
an input position detection unit provided at a display screen side of a display device on which a predetermined object is displayed, for detecting a position of an input by a first manipulation body on the display screen;
an object specifying unit for specifying a selected object that is the object selected by the first manipulation body based on input position information indicating the input position and display position information indicating a display position of the object;
a gesture detection unit provided at a back side of the display screen of the display device, for detecting a predetermined gesture when the predetermined gesture is input by a second manipulation body;
an output device selection unit for selecting an output device that is an external device for outputting content data corresponding to the selected object based on first gesture information indicating the gesture detected by the gesture detection unit; and
a signal generation unit for generating a control signal for causing the selected output device to execute a predetermined process based on second gesture information indicating a gesture detected after position information of the content data is transmitted to the output device.
